# EUROPÄISCHE PATENTSCHRIFT

(11) **EP 2 964 136 B1**
(45) Veröffentlichungstag und Bekanntmachung des Hinweises auf die Patenterteilung: **10.03.2021**
(21) Anmeldenummer: 14716227.5
(22) Anmeldetag: 22.01.2014
(51) Int. Cl.: A61C 9/00, A61C 19/045

(54) **BISSGABEL MIT AUSSPARUNGEN**
BITE FORK WITH RECESSES
FOURCHETTE OCCLUSALE POURVUE D'ÉVIDEMENTS

(30) Priorität: 04.03.2013 DE 102013203597; 12.03.2013 DE 102013204207
(43) Veröffentlichungstag der Anmeldung: 13.01.2016
(73) Patentinhaber: Zebris Medical GmbH, 88316 Isny im Allgäu (DE)
(72) Erfinder: BRUNNER, Wolfgang, 88316 Isny (DE)
(74) Vertreter: Heinze, Ekkehard
(86) Internationale Anmeldenummer: PCT/DE2014/200021
(87) Internationale Veröffentlichungsnummer: WO 2014/135160

(56) Entgegenhaltungen:
- DE-A1- 3 400 781
- DE-A1-102007 034 343
- DE-A1-102010 021 934
- DE-A1-102011 014 555
- DE-U1-202013 001 910
- US-A- 307 579
- US-A- 765 919
- US-A1- 2005 106 529

## Beschreibung

Die Erfindung betrifft ein Verfahren und ein System zur Darstellung eines Gebisses, bei dem eine neuartige Bissgabel zum Einsatz kommen.

Bissgabeln sind ein seit langem bekanntes Arbeitsmittel der Dentalmedizin, mit dem Abdrücke der Zahnoberflächen genommen und, insbesondere zur Erzeugung von Zahnmodellen, weiter verarbeitet werden können. Es handelt sich hierbei üblicherweise um einstückige Kunststoffteile, die in verschiedenen Gestaltungsformen bekannt sind. Diese Kunststoffteile werden mit einem sogenannten Registriermaterial (Registrat) gefüllt bzw. belegt, in das sich die Zahnoberflächen des Patienten als sog. Impression einprägen, wenn ihm die Bissgabel eingesetzt wird und er in das Registrat beisst.

Im Zusammenhang mit verschiedenen zahnärztlichen Leistungen, speziell der Bereitstellung von hochwertigen Teil- oder Totalprothesen oder Schienen, ist die Darstellung und Animation von virtuellen Zahnflächen in Rechnereinheiten wünschenswert Hierzu wurden von der Anmelderin in der DE 102 18 435 B4 ein Positionsbestimmungssystem sowie eine speziell gestaltete Bissgabel zum Einsatz in solchen vorgeschlagen. Die Bissgabel hat einen Fortsatz, an dem eine Haltevorrichtung für Positionssensoren bzw. -marker des Positionsbestimmungssystems (etwa Ultraschallmarker) angebracht werden kann. Eine weiter entwickelte Bissgabel dieser Art ist auch in der unveröffentlichten PCT/EP2011/058790 der Anmelderin beschrieben. An jener Bissgabel ist eine Röntgenmarker-Konfiguration fest angebracht oder anbringbar.

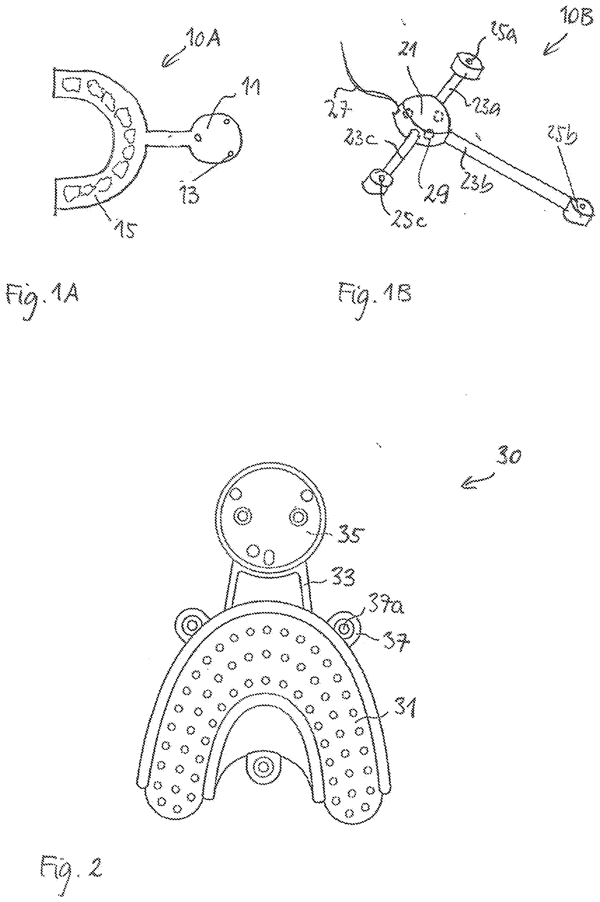

Fig. 1a zeigt skizzenartig ein Bissnahme-Teil 10A einer ersten bekannten Bissgabel mit einem Fortsatz 11, auf dem eine Metall- Haltescheibe mit drei Rastöffnungen 13 vorgesehen sind, sowie mit einem Registriermaterial (Registrat) 15, in das Abdrücke von Zahnoberflächen eingeprägt sind.

Fig. 1b zeigt ein Positionsmarker-Teil 10B dieser Bissgabel, das ein scheibenförmiges Mittelteil 21 und drei an dieses angeformte Arme 23a, 23b und 23c hat, an deren Enden jeweils ein Positionsmarker 25a, 25b bzw. 25c sitzt. In anderen Ausführungen sind die Positionsmarker auf einem bogenförmigen Grundkörper angeordnet. In der dargestellten Ausführung ist ein Kabel 27 zur Stromversorgung der als aktive Markerelemente ausgestalteten Positionsmarker vorgesehen; die Positionsmarker können jedoch auch passiv sein und benötigen dann keine Stromversorgung und folglich kein Anschlusskabel. Das Mittelteil 21 ist zur Anbringung am kreisförmigen Teil des Fortsatzes 11 des Bissnahme-Teils nach Fig. 1A mittels kleiner Kugeln 29 ausgebildet die in die Rastöffnungen 13 des Bissnahme-Teils einrasten. Im Halteteil 21 befindet sich ein Magnet, der die Verbindung zur Halteplatte des Bissnahme-Teils herstellt. Die Anordung der Kugeln und des Magnets kann auch auf dem Bissnahme-Teil erfolgen, wobei die Haltescheibe 13 dann am Positionsmarker-Teil befestigt ist. Das Positionsmarker-Teil kann in einer weiteren Ausführung mittels mechanischer Verschlussmittel am Bissnahme-Teil befestigt werden.

Fig. 2 zeigt eine weitere Bissgabel 30, die grundsätzlich ähnlich der in Fig. 1 dargestellten Ausführung ist, hier ohne Registrat und Zahnabdrücke dargestellt. An einen gabel- bis plattenförmigen Grundkörper 31 ist auch hier ein Fortsatz 33 angeformt, der sich zu einer kreisförmigen Platte 35 erweitert auf der eine separat gefertigte Positionsmarker-Konfiguration der in Fig. 2 gezeigten oder ähnlicher Art befestigt werden kann. Insofern kann die gezeigte Bissgabel auch als Bissnahme-Teil einer komplexeren Bissgabel bzw. Bissgabelanordnung angesehen werden, zu der weiterhin mindestens ein Sensorik-Teil gehört. Zusätzlich hat die Bissgabel 30 kleinere angeformte Fortsätze 37 mit Haltepunkten 37a zum Einsetzen von Röntgenmarkern.

In der DE 20 2011 105 953.0 U der Anmelderin wird eine Verbesserung der oben beschriebenen Bissgabeln beschrieben, deren Kern in einem zweiteiligen Aufbau besteht.

Seit einigen Jahren gewinnt die Erfassung der Zahnoberflächen bzw. insgesamt der Geometrie des Mundinnenraumes von Patienten mittels intraoraler Scanner an Bedeutung. Die mittels solcher Scanner gewonnenen Bilder der Zahnoberflächen bzw. der Mundhöhle sind nicht ohne Weiteres für eine Animation und die Simulation von Bewegungsabläufen des Gebisses brauchbar.

Bisher vorhandene Bissgabeln sind geeignet, die Relation von extraoralen Scannern und den gemessenen Oberflächen von Zahnmodellen, zu Positionsmesssystemen herzustellen. Die partiellen Zahnflächen, die mit intraoralen 3D-Oberflächenscannern direkt im Mund erfasst werden, können dagegen nicht ohne Weiteres mit Positionsmesssystemen korreliert werden. Des Weiteren können mit intraoralen Scannern größere Abschnitte des Zahnbogens oder der gesamte Z
ahnbogen des Ober- oder Unterkiefers nicht mit hoher Genauigkeit erfasst werden, da die jeweils relativ kleinen Zahnflächen erfasst und diese zu einer großen zusammengehörigen Fläche zusammengemacht werden müssen. Hierbei addieren sich die Positionsfehler entsprechend auf.

Zum Stand der Technik wird im Übrigen hingewiesen auf DE 34 00 781 A1, US 307 579 A, US 765 919 A, DE 10 2011 014555 A1, US2005/106529 A1, DE 20 2013 001910 U1 und DE 10 2007 034343 A1.

Der Erfindung liegt die Aufgabe zugrunde, ein System und Verfahren zur Darstellung eines Gebisses anzugeben, die verbesserte diagnostische Aussagemöglichkeiten, insbesondere unter Nutzung neuer Techniken der Dentaldiagnostik, bieten.

Diese Aufgabe wird durch ein System mit den Merkmalen des Anspruchs 1 gelöst. Des Weiteren wird ein Verfahren zur Darstellung eines Gebisses mit den Merkmalen des Anspruchs 8 bereitgestellt. Zweckmäßige Fortbildungen des Erfindungsgedankens sind Gegenstand der jeweiligen abhängigen Ansprüche.

Erfindungsgemäß hat die Bissgabel des vorgeschlagenen System an der Beißfläche Aussparungen zur partiellen Sichtbarmachung der Zahnoberflächen zur Erfassung der Zahnoberfläche über einen intraoralen 3D-Oberflächenscanner und Markierungen, welche für diesen Sensor erfassbar sind. Sie ist damit zusammen und gleichzeitig mit einem intraoralen Scanner einsetzbar. In einer bevorzugten Ausführung weist die Bissgabel ein Positionsmarker-Teil zur Gewinnung von mit diesen 3D-Bilddaten zu verknüpfenden "absoluten" Positionsdaten auf. Anstelle eines Positionsmarker-Teils oder zusätzlich auf einem solchen kann neben dem Aufsteckteil mit einem Positionssensor eine weiterere Sensorik vorgesehen sein, die zusätzliche Daten oder Bilder zur Herstellung von qualitativ bzw. ästhetisch verbesserten Dentalprothesen liefern kann. Grundsätzlich ist die Realisierung der Erfindung aber auch bei einer einfachen Bissgabel bzw. -platte ohne jegliche Sensorik möglich.

Die Bissgabel ermöglicht es, eine Relation zwischen den Messdaten von intraoralen 3D-Oberflächenscannern und den Daten von SD- Positioniersystemen herzustellen und gleichzeitig große Zahnflächen oder den gesamten Zahnbogen mit hoher Genauigkeit zu erfassen um die Oberflächen statisch wie auch in Bewegung mit hoher Präzision darstellen zu können. Dies ermöglicht verbesserte diagnostische Aussagen sowie verbesserte Simulationsmöglichkeiten bei Krafteinleitung und Kollisionsüberprüfung bei der Erstellung von Zahnersatz im Bereich Prothetik und Implantologie.

In Ausführungen der Erfindung umfasst die Bissgabel Verstellmittel zur variablen Einstellung des Öffnungsbereiches mindestens eines Teils der Aussparungen.

In einer Ausgestaltung weisen die Verstellmittel verschiebliche Stege auf, die derart ausgebildet sind, dass sie einen äußeren Randbereich und einen inneren Randbereich oder Mittenbereich der Bissgabel an verschiedenen Punkten von deren Erstreckung miteinander verbinden können. Mit dieser Ausführung und Ausgestaltung lassen sich mit den verschiedenen Verfahren (Scannen bzw. Abdruck-Gewinnung) variabel Daten verschiedener Zahnoberflächen bzw. Gebissabschnitte gewinnen und zur kombinierten Auswertung bereitstellen. Optional können die vorgeschlagenen Verstellmittel (speziell verschieblichen Stege) auch einzeln herausnehmbar ausgeführt sein.

In einer weiteren Ausführung ist vorgesehen, dass mindestens ein Teil der Markierungen als charakteristische, optisch oder 3D erfassbare Aus- oder Einformungen oder optische oder 3D Kontrastmarker, insbesondere als Reihe von Aus- oder Einformungen oder Kontrastmarkern, in einem Randbereich oder beiden Randbereichen der Bissgabel ausgebildet ist. Bei dieser Ausführung gewinnt ein intraoraler 3D Oberflächenscanner neben Daten der Zahn- bzw. Kieferoberfläche zugleich Referenzdaten für die Kombination der vorzugsweise mittels Abdruckmasse fixierten Bissgabel. Grundsätzlich ist allerdings diese Referenz auch mit andersartigen Markierungen zu realisieren.

Beispielsweise kann mindestens ein Teil der Markierungen als röntgenopake Elemente ausgebildet sein, die an einen Grundkörper der Bissgabel angefügt oder in diesen eingebettet sind. Die benötigte Referenz wird dann mittels eines Röntgenbildes hergestellt.

In einer weiteren Ausführung umfasst die Bissgabel ein Bissnahme-Teil mit ersten Befestigungsmitteln und ein Positionsmarker-Teil oder Sensorik-Teil mit zu den ersten Befestigungsmitteln passenden zweiten Befestigungsmitteln, welches mit dem Bissnahme-Teil lösbar verbunden ist.

Die Ausführung der Bissgabel mit abnehmbarem Positionsmarkerteil bietet zum Einen Handhabungs-Vorteile, weil das eigentliche Bissnahme-Teil weniger sperrig als die vorstehend beschriebenen Bissgabeln ist und auch bei komplexen Bissnahme- und Positionsbestimmungs-Konfigurationen unter Einschluss von Oberkiefer- und Unterkiefer-Komponenten nicht störend wirkt. Insbesondere kann der Positionssensor auf das an den Unterkieferzähnen befestigte Attachment aufgesetzt werden, ohne dass es zu einer räumlicher Kollision zur Bissgabel kommt.

Der vorgeschlagene Aufbau vergrößert insofern die Einsatzmöglichkeiten, als dem Bissname-Teil verschiedene Positionsmarker-Teile unmittelbar hinzugefügt werden können, ohne dass der Materialaufwand und logistische Aufwand der Bereitstellung verschiedenartiger kompletter Bissgabeln betrieben werden muss.

In einer Ausgestaltung dieser Ausführung bilden bzw. umfassen die ersten und zweiten Befestigungsmittel eine erste und zweite Kontaktfläche, die im verbundenen Zustand des Bissnahme-Teils und Positionsmarker-Teils gegeneinander anliegen und somit eine vorbestimmte eindeutige Lage des Positionsmarker-Teils bezüglich des Bissmarker-Teils festlegen.

Eine hier weiterhin offenbarten, nicht beanspruchtes Bissnahme-Set zur Bildung unterschiedlicher Bissgabeln der oben erläuterten Art zeichnet sich dadurch aus, dass neben einem erfindungsgemäßen Bissnahme-Teil mehrere austauschbare Positionsmarker-Teile oder sonstige Zusatzteile (z.B. eine Vorrichtung zur Erfassung der Gesichtssymmetrie) mit zu den ersten Befestigungsmitteln (an dem Bissnahme-Teil) passenden zweiten Befestigungsmitteln vorgesehen sind.

Das vorgeschlagene dentaldiagnostische System umfasst neben einer Bissgabel der oben erläuterten Art Zahnoberflächen-Erfassungsmittel zur Bereitstellung eines Abbildes mindestens eines Teils der Zahnoberflächen des Gebisses, an die Positionsmarkerelemente der Bissgabel angepasste erste Positionserfassungsmittel zur Positionserfassung der Bissgabel im in dem Mund eines Probanden eingesetzten Zustand, erste Verarbeitungsmittel zur Korrelation des Abbildes der Zahnoberflächen und der Positionsdaten der Bissgabel zur Bereitstellung eines raumkoordinatengetreuen Abbildes der Zahnoberflächen, einen an den Zähnen zu befestigenden paraokklusalen Löffel mit weiteren Positionsmarkerelementen, an die weiteren Positionsmarkerelemente angepasste zweite Positionserfassungsmittel zur laufenden Positionserfassung des paraokklusalen Löffels während Bewegungen des Gebisses und zweite Verarbeitungsmittel zur Erzeugung der Bewegtbild-Darstellung des Gebisses aufgrund des raumkoordinatengetreuen Abbildes der Zahnoberflächen und der zeitabhängigen Positionsdaten des paraokklusalen Löffels.

In einer zweckmäßigen Ausführung sind die Zahnoberflächen-Erfassungsmittel durch einen intraoralen Scanner realisiert, wobei die Bissgabel optisch durch den Scanner erfassbare Markierungen aufweist. In einer hierzu alternativen Ausführung sind die Zahnoberflächen-Erfassungsmittel durch einen Röntgenbildsensor realisiert, und an der Bissgabel sind röntgenopake Markierungen vorgesehen.

In einer weiteren Ausführung sind in einem mundäußeren Abschnitt der Bissgabel Gesichtsoberflächen-Erfassungsmittel zur Bereitstellung eines Abbildes mindestens eines Abschnitts des Gesichts des Probanden vorgesehen.

Die ersten Verarbeitungsmittel sind dann auch zur Korrelation des Abbildes der Gesichtsoberfläche mit den Positionsdaten der Bissgabel und zur Bereitstellung eines raumkoordinatengetreuen Abbildes der Gesichtsoberfläche und die zweiten Verarbeitungsmittel zur Bereitstellung einer Bewegtbild-Darstellung des Gesichts des Probanden ausgebildet.

In kostengünstig mit marktgängigen Elektronik-Komponenten realisierbaren Ausführungen weisen die Positionsmarkerelemente der Bissgabel und/oder die weiteren Positionsmarkerelemente des paraokklusalen Löffels Ultraschallmarker, optische Marker oder magnet-sensorisch erfassbare Markerelemente auf.

Merkmale des erfindungsgemäßen Verfahrens zur Darstellung eines Gebisses ergeben sich im Wesentlichen unmittelbar aus den oben erläuterten Systemaspekten der Erfindung und werden daher hier nicht nochmals beschrieben. Es wird aber darauf hingewiesen, dass sowohl unter Verfahrensals auch unter Systemaspekten mittels der erfindungsgemäßen Bissgabel in vorteilhafter Weise eine Bewegtbild-Darstellung erzeugt werden kann, der Anwendungsbereich der Erfindung hierauf aber nicht beschränkt ist. Auch herkömmliche Verfahren zur Herstellung von Dentalprothesen können von den Vorteilen des Einsatzes der erfindungsgemäßen Bissplatte und der kombinierten Auswertung von Impressionen in einem Registrat der Bissplatte und von direkt im Mund des Patienten aufgenommenen 3D Oberflächen profitieren. Beispielsweise können bestimmte Probleme, die bei intraoralen 3D-Scannern bei der Darstellung eines gesamten Kieferbogens auftreten können, anhand von mit der erfindungsgemäßen Bissgabel genommenen Impressionen korrigiert werden.

Vorteile und Zweckmäßigkeiten der Erfindung ergeben sich im Übrigen aus der nachfolgenden Beschreibung von Ausführungsbeispielen anhand der Figuren. Von diesen zeigen:
Fig. 1A und 1B skizzenartige Darstellungen einer bekannten Bissgabel als Draufsicht,
Fig. 2 eine Darstellung einer bekannten Bissplatte in Draufsicht,
Fig. 3 eine Darstellung einer auf der Bissplatte nach Fig. 2 beruhenden erfindungsgemäßen Bissplatte,
Fig. 4A bis 4D Darstellungen einer weiteren Ausführungsform der erfindungsgemäßen Bissgabel, und
Fig. 5 eine skizzenartige Darstellung einer Ausführung eines erfindungsgemäßen Systems zur Bewegtbild-Darstellung eines Gebisses.

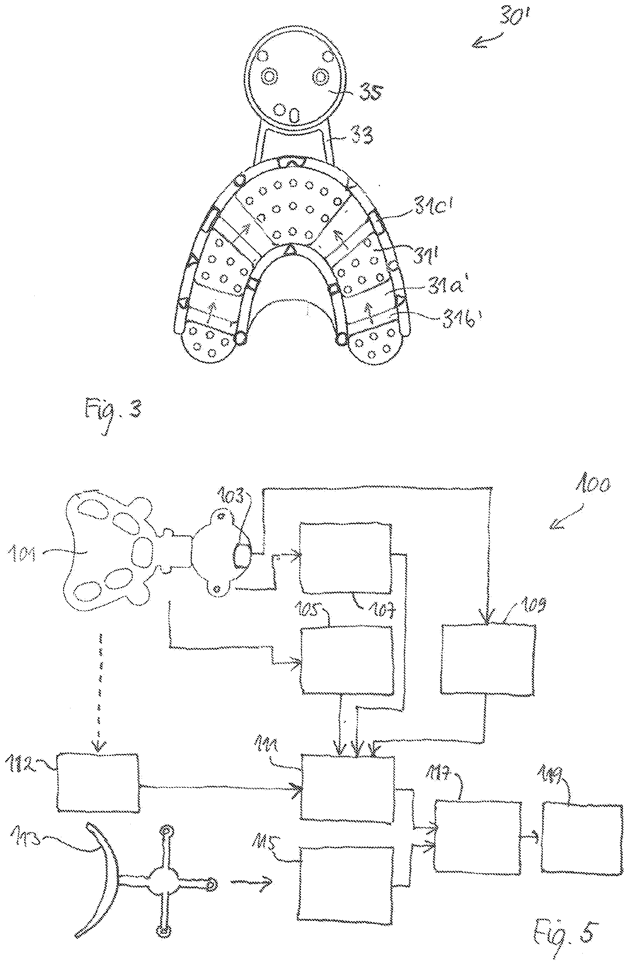

Fig. 3 zeigt eine Bissgabel 30', in deren Grundkörper 31' mehrere Öffnungen 31a' vorgesehen sind, denen jeweils ein am Außen- und Innenrand der Bissgabel verschieblich gehalterter Steg 31b' zugeordnet ist. Die Öffnungen 31a' dienen wiederum dazu, Bereiche der Zahn- bzw. Kieferoberflächen für einen intraoralen Scanner sichtbar zu lassen, und mittels der verschieblichen Stege 31b' lässt sich der entsprechende Bildausschnitt variabel einstellen. Die Figur zeigt lediglich eine beispielhafte Konfiguration der Öffnungen und Stege, von der vielgestaltige Abwandlungen möglich sind. So kann nahezu die gesamte Auflagefläche für das Registrat ausschließlich durch verschiebliche (dann bevorzugt breitere) Stege gebildet und eine praktisch vollständig freie Wahl der freiliegenden Oberflächenbereich der Zähne bzw. des Kiefers getroffen werden. Markante Anformungen 31c' am Innen- und Außenrand des Grundkörpers 31' (die in der Figur mit verschiedener Gestalt gezeigt, aber zusammenfassend mit Ziffer 31c' bezeichnet sind) dienen als optische Markierungen für eine optische Bilderfassung des Mundinnenraumes, als Referenz für eine Positionszuordung im Rahmen der Bildverarbeitung.

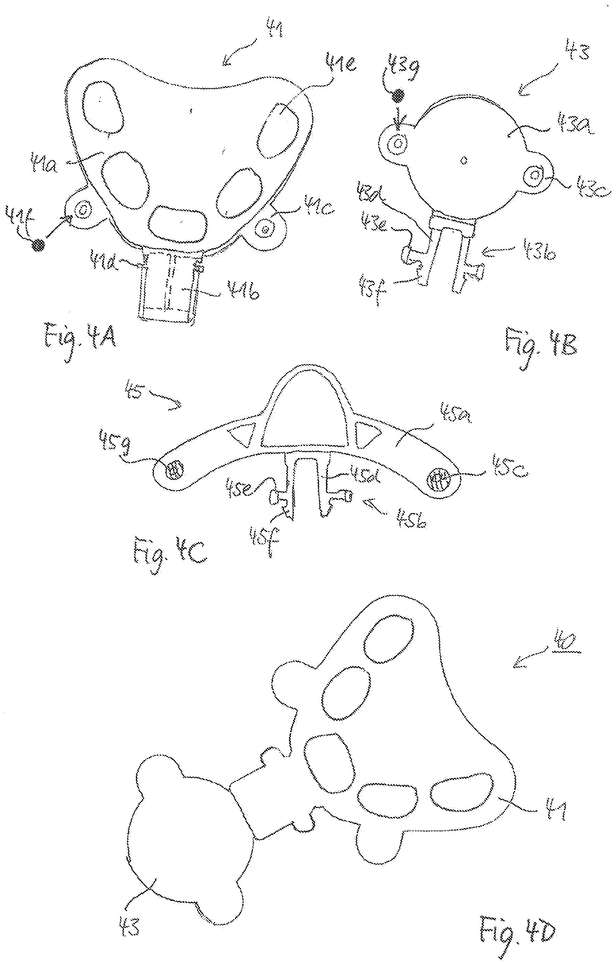

Die Figuren 4A bis 4C zeigen ein Bissnahme-Teil 41 (Fig. 4A) sowie zwei verschiedene Positionsmarker-Teile 43 (Fig. 4B) bzw. 45 (Fig. 4C) einer Bissgabel 40, die Positionsmarkerelemente zur Positionsbestimmung in einem Positionsbestimmungssystem aufweist oder aufnehmen kann und die im Umriss in einer möglichen Konfiguration in Fig. 4D gezeigt ist.

Das Bissnahme-Teil 41 umfasst einen gabel- bis plattenförmigen Grundkörper 41a , an den ein kurzer klammerartiger Fortsatz 41b angeformt ist, der erste Befestigungsmittel der Bissgabel 40 bildet, die durch Anbringung eines der Positionsmarker-Teile 43 oder 45 gemäß Fig. 4B oder Fig. 4C gebildet wird. Der Grundkörper 41a des Bissnahme-Teils 41 hat eine Mehrzahl von Öffnungen 41e , die auch beim Befüllen des Bissnahme-Teils mit Registrat freigelassen werden und die im eingesetzten Zustand der Bissgabel an den entsprechenden Stellen liegenden Zahn- bzw. Kieferoberflächenabschnitte sichtbar lassen. Diese Abschnitte sind dann der Erfassung durch einen intraoralen Scanner zugänglich. Grundsätzlich können die Aussparungen 41e deutlich größer sein und die gesamte Zahnfläche umfassen, so dass nur noch ein Außenrand zur Aufnahme der Markierungen und zur Fixierung an den Zahnflächen übrig bleibt.

Beide Positionsmarker-Teile weisen zu den ersten Befestigungsmitteln 41b des Bissnahme-Teils korrespondierende zweite Befestigungsmittel 43b bzw. 45b an einem scheibenförmigen Grundkörper 43a bzw. bogenförmigen Grundkörper 45a auf. Bei der dargestellten Ausführung haben sowohl das Bissnahme-Teil 41 als auch die Positionsmarker-Teile Ausformungen zur Aufnahme von Positionsmarkern, und zwar als Fortsätze 41c bzw. 43c am jeweiligen Grundkörper des Bissnahme-Teils 41 bzw. des Positionsmarker-Teils 43 oder als Einprägungen 45c an den freien Enden des bogenförmigen Grundkörpers 45a des Positionsmarker-Teils 45. In Figuren 4B ist ein kugelförmiger Positionsmarker 43c bzw. 43g mit einem Pfeil neben einem der Fortsätze dargestellt, um zu verdeutlichen, dass er dort eingeklipst werden kann. Es ist auch möglich, das Bissnahme-Teil und Positionsmarker-Teil mit fest eingefügten Positionsmarkern herzustellen, wie in Fig. 4C den eingegossenen Positionsmarkern 45c und 45g.

Die zweiten Befestigungsmittel 43b bzw. 45b sind ebenfalls klammerartig mit zwei Schenkeln 43d gestaltet, die gemeinsam in die durch die Schenkel der klammerartigen ersten Befestigungsmittel 41b gebildete Aussparung am Bissnahme-Teil 41 passen. An den Schenkeln 43d bzw. 45d sind jeweils Fortsätze 43e bzw. 45e angeformt, die als Handhaben zu einem leichten Zusammendrücken der Schenkel zur Einführung in die Befestigungsklammer 41b am Bissnahme-Teil bzw. zur Entnahme aus diesem dienen.

Kleine Widerhaken 43f bzw. 45f an den freien Enden der Schenkel 43d bzw. 45d gleiten beim Einsetzen des jeweiligen Positionsmarker-Teils in das Bissnahme-Teil an Stegen 41d vorbei, die an den Außenkanten der Klammer 41b (sich senkrecht zur Ebene der beiden Klammer-Schenkel erstrecken) angeformt sind, und verrasten das jeweilige Positionsmarker-Teil am Bissnahme-Teil, indem sich die Schenkel der zweiten Befestigungsmittel nach Passieren der Stege hinter diesen etwas aufspreizen und somit verankern. Diese Verankerung wird durch das Zusammendrücken der Schenkel mittels der Handhaben 43e bzw. 45e gelöst, und die Widerhaken können zum Entnehmen des Positionsmarker-Teils vom Bissnahme-Teil an den Stegen 41d vorbei wieder zurück gleiten.

Modifikationen der oben darstellten Ausführungen sind beispielsweise dahingehend möglich, dass Öffnungen (Aussparungen) im Material der Bissgabel - und dann auch im Registrat - nur im links- oder rechtsseitigen Teil vorgesehen sind. Auch eine generell nur als "halbseitige" Bissplatte gestaltete Ausführung kann mit Öffnungen bzw. Aussparungen zur direkten Aufnahme der Zahnoberflächen mittels eines Scanners versehen sein.

Fig. 5 zeigt als Prinzipskizze wesentliche Teile eines Systems 100 zur Bewegtbild-Erfassung/-Darstellung des Gebisses eines Patienten oder Probanden, welches eine Bissgabel der oben beschriebenen Art umfasst. Eine solche, hier mit Ziffer 101 bezeichnete Bissgabel trägt in der dargestellten Systemkonfiguration an ihrem mundäußern Teil (Positionsmarker-Teil) eine Kamera 103 zur Aufnahme der Gesichtsoberfläche eines Patienten. Das System umfasst eine Zahnoberflächen-Erfassungseinheit 105, die intraoral mindestens Abschnitte der Zahnoberflächen des Patienten erfasst, und eine Positionserfassungseinheit 107, die die Positionssignale der Positionsmarker der Bissgabel 101 auswerten. Die Zahnoberflächen-Erfassungseinheit 105 kann durch einen intraoralen 3D-Oberflächenscanner realisiert sein. Eine Kamerabild-Verarbeitungseinheit 109 leistet eine Vor-Bearbeitung des mit der Kamera 103 aufgenommenen Bildes des Gesichts.

Die Ausgangsdaten der Zahnoberflächen-Erfassungseinheit 105 und der Positionserfassungseinheit 107 sowie auch der Kamerabild-Verarbeitungseinheit 109 gelangen zu Eingängen einer ersten Verarbeitungseinheit 111, in der das durch die Bilddaten repräsentierte Abbild der Zahnoberflächen und die verarbeiteten Positionsdaten der Bissgabel zu einem raumkoordinatengetreuen (mindestens partiellen) Abbild des Gebisses des Patienten verarbeitet werden, wobei zugleich eine Korrelation mit dem Abbild der Gesichtsoberfläche des Patienten hergestellt werden kann. Insgesamt wird in der ersten Verarbeitungseinheit ein Datenbestand gewonnen, der eine koordinatengetreue bildliche Darstellung sowohl des Gebisses als auch des Gesichts des Patienten ermöglicht.

Ein mit dem Registrat in der Bissgabel 101 gewonnener Zahnoberflächen-Abdruck wird parallel in traditioneller Weise verarbeitet, und die durch diese Verarbeitung gewonnenen Daten werden mittels einer Korrekturdaten-Eingabeeinheit 112 zur Verifizierung der Scanner- und Positionsdaten eingegeben oder auch unabhängig vom hier beschriebenen System für andere dentaldiagnostische Zwecke genutzt.

Einen weiteren Systembestandteil bildet ein (als solcher bekannter) paraokklusaler Löffel 113 mit weiteren (nicht gesondert bezeichneten) Positionsmarker-Elementen, der an den Zähnen des Unterkiefers des Patienten derartig befestigt wird, dass er Gebissbewegungen erlaubt und mittels seiner Positionsmarker in der Bewegung laufend Positionsdaten liefert. Eine zweite Positionserfassungseinheit 115 registriert und verarbeitet jene in Bewegung aufgenommenen Positionsdaten, und eine zweite Verarbeitungseinheit 117 empfängt sowohl die gewonnenen Bewegungsbahndaten als auch die ausgangsseitig der ersten Verarbeitungseinheit bereitgestellten Datensätze und generiert eine Bewegtbild-Darstellung des Gebisses und Gesichts des Patienten und stellt diese auf einer Ausgabeeinheit (die in an sich bekannter Weise einen Bildschirm und weitere Speicher- und Verarbeitungsmittel umfassen kann) zur Begutachtung und Auswertung durch einen Therapeuten bereit.

## Patentansprüche

1. System (100) zur Bewegtbild-Darstellung eines Gebisses, aufweisend:
eine Bissgabel (30; 40; 101) zur Bissnahme mit Positionsmarkerelementen (43c; 43g; 45c; 45g) zur Positionsbestimmung in einem Positionsbestimmungssystem, wobei die Bissgabel an der Beißfläche Aussparungen (31a') zur partiellen Sichtbarmachung der Zahnoberflächen für einen im Mundraum eines Patienten platzierten 3D-Oberflächenscanner oder Röntgenbildsensor und Markierungen (31c') aufweist, welche für diesen erfassbar sind,
einen intraoralen 3D-Oberflächenscanner (105) oder Röntgenbildsensor zur Bereitstellung eines Abbildes mindestens eines Teils der Zahnoberflächen des Gebisses, an die Positionsmarkerelemente der Bissgabel angepasste erste Positionserfassungsmittel (107) zur Positionserfassung der Bissgabel im in den Mund eines Probanden eingesetzten Zustand,
erste Verarbeitungsmittel (111) zur Korrelation des Abbildes der Zahnoberflächen und der Positionsdaten der Bissgabel zur Bereitstellung eines raumkoordinatengetreuen Abbildes der Zahnoberflächen,
einen an den Zähnen zu befestigenden paraokklusalen Löffel (113) mit weiteren Positionsmarkerelementen,
an die weiteren Positionsmarkerelemente angepasste zweite Positionserfassungsmittel (115) zur laufenden Positionserfassung des paraokklusalen Löffels während Bewegungen des Gebisses und
zweite Verarbeitungsmittel (117) zur Erzeugung der Bewegtbild-Darstellung des Gebisses aufgrund des raumkoordinatengetreuen Abbildes der Zahnoberflächen und der zeitabhängigen Positionsdaten des paraokklusalen Löffels,
wobei die ersten Verarbeitungsmittel zur Verarbeitung eines ersten, im Mund des Probanden durch die Aussparungen der Bissgabel hindurch erfassten Abbildes von Zahnoberflächen und eines zweiten, anhand von Impressionen in der Bissgabel gewonnenen Abbildes von Zahnoberflächen, insbesondere im Sinne einer Korrektur-Verarbeitung des ersten Abbildes und zweiten Abbildes, ausgebildet sind.

2. System nach Anspruch 1, wobei die Bissgabel (101), insbesondere in einem mundäußeren Abschnitt, Gesichtsoberflächen-Erfassungsmittel (103) zur Bereitstellung eines Abbildes mindestens eines Abschnitts des Gesichts des Probanden aufweist und die ersten Verarbeitungsmittel (111) auch zur Korrelation des Abbildes der Gesichtsoberfläche mit den Positionsdaten der Bissgabel und zur Bereitstellung eines raumkoordinatengetreuen Abbildes der Gesichtsoberfläche und die zweiten Verarbeitungsmittel (117) zur Bereitstellung einer Bewegtbild-Darstellung des Gesichts des Probanden ausgebildet sind.

3. System nach Anspruch 1 oder 2, wobei die Bissgabel (30') Verstellmittel (31b')zur variablen Einstellung des Öffnungsbereiches mindestens eines Teils der Aussparungen (31a') aufweist, wobei die Verstellmittel insbesondere verschiebliche Stege aufweisen, die derart ausgebildet sind, dass sie einen äußeren Randbereich und einen inneren Randbereich der Bissgabel an verschiedenen Punkten von deren Erstreckung miteinander verbinden können.

4. System nach einem der vorangehenden Ansprüche, wobei mindestens ein Teil der Markierungen (31c') der Bissgabel (30') als charakteristische, optisch oder in der Oberflächenform erfassbare Aus- oder Einformungen oder Kontrastmarker, insbesondere als Reihe von Aus- oder Einformungen oder Kontrastmarkern, vorzugsweise in einem Randbereich oder beiden Randbereichen der Bissgabel ausgebildet ist.

5. System nach einem der vorangehenden Ansprüche, wobei mindestens ein Teil der Markierungen der Bissgabel (40) als röntgenopake Elemente (41c,41f) ausgebildet ist, die an einen Grundkörper der Bissgabel (40) angefügt oder in diesen eingebettet sind.

6. System nach einem der vorangehenden Ansprüche, wobei die Bissgabel (40) ein Bissnahme-Teil (41) mit ersten Befestigungsmitteln (41b) und ein Positionsmarker-Teil (43, 45)oder Sensorik-Teil mit zu den ersten Befestigungsmitteln passenden zweiten Befestigungsmitteln (43b, 45b) aufweist, welches mit dem Bissnahme-Teil lösbar verbunden ist.

7. System nach Anspruch 6, wobei die ersten (41b) und zweiten (43b, 45b) Befestigungsmittel der Bissgabel (40) eine erste und zweite Kontaktfläche umfassen, die im verbundenen Zustand des Bissnahme-Teils (41) und Positionsmarker-Teils (43,45) oder Sensorik-Teils gegeneinander anliegen und somit eine vorbestimmte 3D-Position des Positionsmarker-Teils oder Sensorik-Teils bezüglich des Bissmarker-Teils festlegen.

8. Verfahren zur Darstellung eines Gebisses mit einem System (100) nach einem der vorangehenden Ansprüche, aufweisend die Erfassung eines Abbildes von Zahnoberflächen im Mund eines Probanden bei eingesetzter Bissgabel (30'; 40; 101), durch die Aussparungen der Bissgabel hindurch, unter gleichzeitiger Erfassung von Markierungen der Bissgabel, und die gemeinsame Verarbeitung des Abbildes der Zahnoberflächen und der Bilder der Markierungen zur Gewinnung kalibrierter Bilddaten der Zahnoberflächen.

9. Verfahren nach Anspruch 8, aufweisend die Erfassung eines zusätzlichen Abbildes von Zahnoberflächen des Probanden, durch Erfassung von Impressionen im Registrat der Bissgabel und
kombinierte Verarbeitung der Abbilder der Zahnoberflächen und der Impressionen, insbesondere als Korrektur-Verarbeitung.

10. Verfahren nach Anspruch 8 oder 9, ausgeführt als Verfahren zur Bewegtbild-Darstellung, wobei
eine Positionserfassung der Bissgabel (30'; 40; 101) in den Mund des Probanden eingesetzten Zustand durch an die Positionsmarkerelemente der Bissgabel angepasste erste Positionserfassungsmittel (107) erfolgt, das Abbild der Zahnoberflächen und die Positionsdaten der Bissgabel einer korrelierten Verarbeitung zur Bereitstellung eines raumkoordinatengetreuen Abbildes der Zahnoberflächen unterzogen werden,
eine laufende Positionserfassung eines an den Zähnen des Probanden befestigten paraokklusalen Löffels (113) mit weiteren Positionsmarkerelementen durch an die weiteren Positionsmarkerelemente angepasste zweite Positionserfassungsmittel (115) erfolgt und
eine Bewegtbild-Darstellung des Gebisses aufgrund des raumkoordinatengetreuen Abbildes der Zahnoberflächen und der zeitabhängigen Positionsdaten des paraokklusalen Löffels durch zweite Verarbeitungsmittel (117) erzeugt wird.

11. Verfahren nach Anspruch 10, wobei mittels in einem mundäußeren Abschnitt der Bissgabel angebrachten Gesichtsoberflächen-Erfassungsmitteln (103) ein Abbild mindestens eines Abschnitts des Gesichts des Probanden erfasst und das Abbild mittels der ersten Verarbeitungsmittel (111) mit den Positionsdaten der Bissgabel (30';40;101) korreliert und hierdurch ein raumkoordinatengetreues Abbild der Gesichtsoberfläche erzeugt und anhand der durch die zweiten Positionserfassungsmittel (115) gewonnenen Positionsdaten in den zweiten Verarbeitungsmitteln (117) eine Bewegtbild-Darstellung des Gesichts des Probanden bereitgestellt wird.

## Claims

1. A system (100) for moving image representation of a dentition, comprising:
a bite fork (30; 40; 101) for bite registration with position marker elements (43c; 43g; 45c; 45g) for position determination in a position determination system, the bite fork having on the bite surface recesses (31a') for partial visualization of the tooth surfaces for a 3D surface scanner or X-ray sensor placed in the oral cavity of a patient and markings (31c') which can be detected by it,
an intraoral 3D surface scanner (105) or X-ray sensor for providing an image of at least a part of the tooth surfaces of the dentition, first position detection means (107) adapted to the position marker elements of the bite fork for detecting the position of the bite fork in a state inserted into the mouth of a subject,
first processing means (111) for correlating the image of the tooth surfaces and the position data of the bite fork to provide a true to space coordinate image of the tooth surfaces,
a paraocclusal tray (113) to be attached to the teeth with further position marker elements,
second position detection means (115) adapted to the further position marker elements for the ongoing position detection of the paraocclusal tray during movements of the dentition and
second processing means (117) for generating the moving image representation of the dentition based on the true to space coordinate image of the tooth surfaces and the time-dependent position data of the paraocclusal tray,
wherein the first processing means for processing a first image of tooth surfaces detected in the mouth of the subject through the recesses of the bite fork, and a second image of tooth surfaces obtained on the basis of impressions in the bite fork are formed, in particular in the sense of correction processing of the first image and the second image.

2. The system according to claim 1, wherein the bite fork (101), in particular in a section on the outside of the mouth, includes face surface detection means (103) for providing an image of at least one section of the subject's face, and the first processing means (111) are also formed for correlating the image of the face surface with the position data of the bite fork and for providing of an true to space coordinate image of the face surface and the second processing means (117) are formed to provide a moving image representation of the subject's face.

3. The system according to claim 1 or 2, wherein the bite fork (30') has adjusting means (31b') for variable adjustment of the opening area of at least one part of the recesses (31a'), wherein, in particular, the adjustment means have displaceable crosspieces which are designed such that they can connect an outer edge area and an inner edge area of the bite fork with each other at different points of its extension.

4. The system according to one of the preceding claims, wherein at least a part of the markings (31c') of the bite fork (30') are formed as characteristic, optically or in the surface shape detectable projections or recesses or contrast markers, in particular as a series of projections or recesses or contrast markers, preferably in an edge area or both edge areas of the bite fork.

5. The system according to one of the preceding claims, wherein at least a part of the markings of the bite fork (40) are designed as radiopaque elements (41c, 41f) which are attached to or embedded in a main body of the bite fork (40).

6. The system according to one of the preceding claims, wherein the bite fork (40) includes a checkbite part (41) with first fastening means (41b) and a position marker part (43, 45) or sensors part with second fastening means (43b, 45) matching the first fastening means, which is detachably connected to the checkbite part.

7. The system of claim 6, wherein the first (41b) and second (43b, 45b) fastening means of the bike fork (40) comprise a first and second contact surface which, in the connected state of the checkbite part (41) and position marker part (43, 45) or sensors part, rest against one another and thus determine a predetermined 3D position of the position marker part or sensors part with respect to the checkbite part.

8. A method for the representation of a dentition with a system (100) according to one of the preceding claims, comprising the detection of an image of tooth surfaces in the mouth of a subject with the bite fork (30'; 40; 101) inserted, through the recesses of the bite fork, with simultaneous detection of markings of the bite fork, and the joint processing of the image of the tooth surfaces and the images of the markings to obtain calibrated image data of the tooth surfaces.

9. The method according to claim 8, comprising the detection of an additional image of the tooth surfaces of the subject by detection of impressions in the registration of the bite fork and
combined processing of the images of the tooth surfaces and the impressions, especially as correction processing.

10. The method according to claim 8 or 9, carried out as method for moving image representation, wherein
a position detection of the bite fork (30'; 40; 101) in the state inserted into the mouth of the subject is carried out by first position detection means (107) adapted to the position marker elements of the bite fork,
the image of the tooth surfaces and the position data of the bite fork are subjected to a correlated processing for the provision of a true to space coordinate image of the tooth surfaces,
an ongoing position detection of a paraocclusal tray (113) attached to the teeth of the subject is carried out with further position marker elements by second position marker means (115) adapted to the further position detection means, and
a moving image representation of the dentition is generated due to the true to space coordinate image of the tooth surfaces and the time-dependent position data of the paraocclusal tray by second processing means (117).

11. The method according to claim 10, wherein face surface detection means (103) attached in an outer mouth section of the bite fork detects an image of at least one section of the face of the subject, and the image is correlated with the position data of the bite fork (30'; 40; 101) by means of the first processing means (111) and thereby a true to space coordinates image of the face surface is generated and based on the position data obtained by the second position detection means (115) a moving image representation of the subject's face image is provided in the second processing means (117).

## Revendications

1. Système (100) pour la représentation par image animée d'une dentition, présentant :
une fourchette occlusale (30 ; 40 ; 101) pour la prise d'occlusion, comprenant des éléments marqueurs de position (43c ; 43g ; 45c ; 45g) servant à déterminer la position dans un système de détermination de position, sachant que la fourchette occlusale présente, au niveau de la surface de morsure, des évidements (31a') servant à rendre visibles en partie les surfaces de dents pour un scanner de surface 3D ou capteur d'image à rayons X placé dans la cavité buccale d'un patient et des marquages (31c'), lesquels sont décelables pour celui-ci,
un scanner de surface 3D intraoral (105) ou capteur d'image à rayons X servant à mettre à disposition une reproduction d'au moins une partie des surfaces de dents de la dentition, des premiers moyens de saisie de position (107) adaptés aux éléments marqueurs de position de la fourchette occlusale servant à saisir la position de la fourchette occlusale à l'état mis en place dans la bouche d'un sujet,
des premiers moyens de traitement (111) servant à mettre en corrélation la reproduction des surfaces de dents et les données de position de la fourchette occlusale pour mettre à disposition une reproduction des surfaces de dents conforme à des coordonnées spatiales,
une cuillère paraocclusale (113) à fixer aux dents, pourvue d'éléments marqueurs de position supplémentaires,
des deuxièmes moyens de saisie de position (115) adaptés aux éléments marqueurs de position supplémentaires pour la saisie de position en continu de la cuillère paraocclusale pendant des mouvements de la dentition, et
des deuxièmes moyens de traitement (117) servant à générer la représentation par image animée de la dentition sur la base de la reproduction des surfaces de dents conforme à des coordonnées spatiales et des données de position dépendantes du temps de la cuillère paraocclusale,
sachant que les premiers moyens de traitement sont constitués pour traiter une première reproduction des surfaces de dents saisie dans la bouche du sujet à travers les évidements de la fourchette occlusale et d'une deuxième reproduction de surfaces de dents obtenues à l'aide d'empreintes dans la fourchette occlusale, en particulier dans le sens d'un traitement de correction de la première reproduction et de la deuxième reproduction.

2. Système selon la revendication 1, sachant que la fourchette occlusale (101) présente, en particulier dans une section extérieure à la bouche, des moyens de saisie de surface de visage (103) servant à mettre à disposition une reproduction d'au moins une section du visage du sujet et les premiers moyens de traitement (111) sont aussi constitués pour mettre en corrélation la reproduction de la surface de visage avec les données de position de la fourchette occlusale et pour mettre à disposition une reproduction de la surface de visage conforme à des coordonnées spatiales et les deuxièmes moyens de traitement (117) sont constitués pour mettre à disposition une représentation par image animée du visage du sujet.

3. Système selon la revendication 1 ou 2, sachant que la fourchette occlusale (30') présente des moyens de réglage (31b') servant à régler de manière variable la plage d'ouverture d'au moins une partie des évidements (31a'), sachant que les moyens de réglage présentent en particulier des traverses translatables qui sont constituées de manière à pouvoir relier l'une à l'autre une zone marginale extérieure et une zone marginale intérieure de la fourchette occlusale en divers points de leur extension.

4. Système selon l'une des revendications précédentes, sachant qu'au moins une partie des marquages (31c') de la fourchette occlusale (30') est constituée comme formations saillantes ou évidées caractéristiques, saisissables optiquement dans la forme de surface, ou marqueurs de contraste, en particulier comme série de formations saillantes ou évidées ou marqueurs de contraste, de préférence dans une zone marginale ou les deux zones marginales de la fourchette occlusale.

5. Système selon l'une des revendications précédentes, sachant qu'au moins une partie des marquages de la fourchette occlusale (40) est constituée comme éléments opaques aux rayons X (41c, 41f) qui sont adjoints à un corps de base de la fourchette occlusale (40) ou logés dans celle-ci.

6. Système selon l'une des revendications précédentes, sachant que la fourchette occlusale (40) présente une partie prise d'occlusion (41) comprenant des premiers moyens de fixation (41b) et une partie marqueurs de position (43, 45) ou partie système de capteur comprenant des deuxièmes moyens de fixation (43b, 45b) assortis aux premiers moyens de fixation, laquelle est reliée de manière détachable à la partie prise d'occlusion.

7. Système selon la revendication 6, sachant que les premiers (41b) et deuxièmes (43b, 45b) moyens de fixation de la fourchette occlusale (40) comprennent une première et une deuxième face de contact qui sont placées l'une contre l'autre à l'état assemblé de la partie prise d'occlusion (41) et de la partie marqueurs de position (43, 45) ou partie système de capteur et définissent ainsi une position 3D prédéterminée de la partie marqueurs de position ou partie système de capteur par rapport à la partie prise d'occlusion.

8. Procédé pour la représentation d'une dentition moyennant un système (100) selon l'une des revendications précédentes, présentant la saisie d'une reproduction de surfaces de dents dans la bouche d'un sujet lorsqu'une fourche occlusale (30' ; 40 ; 101) est mise en place, à travers les évidements de la fourchette occlusale, tout en saisissant en même temps des marquages de la fourchette occlusale, et le traitement conjoint de la reproduction des surfaces de dents et des images des marquages pour obtenir des données d'image calibrées des surfaces de dents.

9. Procédé selon la revendication 8, présentant la saisie d'une reproduction supplémentaire de surfaces de dents du sujet, par saisie d'empreintes dans le support d'enregistrement de la fourchette occlusale et le traitement combiné des reproductions des surfaces de dents et des empreintes, en particulier comme traitement de correction.

10. Procédé selon la revendication 8 ou 9, exécuté comme procédé de représentation par image animée, sachant que
une saisie de position de la fourchette occlusale (30' ; 40 ;101) à l'état mis en place dans la bouche du sujet est effectuée par des premiers moyens de saisie de position (107) adaptés aux éléments marqueurs de position de la fourchette occlusale, la reproduction des surfaces de dents et les données de position de la fourchette occlusale sont soumises à un traitement corrélé servant à mettre à disposition une reproduction des surfaces de dents conforme à des coordonnées spatiales,
une saisie de position en continu d'une cuillère paraocclusale (113) fixée aux dents du sujet est effectuée moyennant des éléments marqueurs de position supplémentaires par des deuxièmes moyens de saisie de position (115) adaptés aux éléments marqueurs de position supplémentaires et
une représentation par image animée de la dentition est générée par des deuxièmes moyens de traitement (117) sur la base de la reproduction des surfaces de dents conforme à des coordonnées spatiales et des données de position dépendantes du temps de la cuillère paraocclusale.

11. Procédé selon la revendication 10, sachant que, moyennant des moyens de saisie de surface de visage (103) placés dans une section de la fourchette occlusale extérieure à la bouche, une reproduction d'au moins une section du visage du sujet est saisie et la reproduction est mise en corrélation moyennant les premiers moyens de traitement (111) avec les données de position de la fourchette occlusale (30' ; 40 ; 101) et une reproduction de la surface de visage conforme à des coordonnées spatiales est générée de la sorte et, à l'aide des données de position obtenues par les deuxièmes moyens de saisie de position (115), une représentation par image animée du visage du sujet est mise à disposition dans les deuxièmes moyens de traitement (117).
